# EUROPEAN PATENT APPLICATION

(11) **EP 0 860 814 A2**
(43) Date of publication of application: **26.08.1998**
(21) Application number: 98301145.3
(22) Date of filing: 17.02.1998
(51) Int. Cl.: G11B 5/41, G11B 7/12, G11B 11/10, G11B 19/02, G11B 19/12, G11B 23/03, G11B 23/36, G11B 27/36

(54) **A cleaning device**

(30) Priority: 17.02.1997 JP 31929/97; 11.04.1997 JP 94139/97; 16.06.1997 JP 149589/97
(71) Applicant: Taiwan Bor Ying Corporation, Panchiao City, Taipei Hsien (TW)
(72) Inventor: Masaaki, Kuwahara, Hoya-chi, Tokyo (JP)
(74) Representative: Sanderson, Michael John

(57) **Abstract**

A cleaning device for cleaning magnetic head and photo pickup of a compact disc drive includes a playback-only disc medium received in a recording-enable disc cartridge. The disc medium has a Read-in TOC area for recording medium identification information to indicate a recording-enable disc medium, a User TOC area, a Recorded area, and a No-record area radially sequentially surrounding the Read-in TOC area. Information for managing records on the Recorded area is recorded in the User TOC area. A cleaning sheet for cleaning the magnetic head is attached to entire surface of the disc medium facing the magnetic head. The Recorded area is radially divided into three sub-areas. The inner sub-area has voice messages of "Cleaning starts" or for operating methods recorded therein, the middle sub-area has 30 minutes of silence and has a brush mounted thereto for cleaning the photo pickup, and the outer sub-area has a voice message of "Cleaning ends" recorded therein. The inner and the middle sub-areas are identified as a magnetic track No. 1 and the outer sub-area a magnetic track No. 2.

## Description

### FIELD OF THE INVENTION

The present invention relates to a cleaning device for cleaning the magnetic head and/or (the object lens of) the photo pickup of a compact disc drive, and more particularly to a cleaning device for cleaning (the object lens of) the photo pickup of a compact disc drive.

### DESCRIPTION OF THE PRIOR ART

It is known that a cleaning device for cleaning the magnetic head and the photo pickup of a compact disc drive is provided at one surface of the disc medium facing the magnetic head with a scraping sheet for scraping the surface of the magnetic head, and at another surface of the disc medium facing the photo pickup with a brush. Japanese Patent Application Publication Nos. 6430 and 6431 in 1995 disclose such cleaning device.

In addition to be used as an external memory of a computer, a compact disc can also be used as a recording medium for musical signals. The mini-disc introduced and commercialized by SONY is a product for such purpose. Data are recorded on such mini-disc photomagnetically and can be recorded either via a magnetic head or a photo pickup. However, playback of data can be done only via the photo pick. Disc cartridges for such compact disc can be divided into two types, namely, recording-enable disc cartridge and playback-only disc cartridge. The recording-enable disc cartridge includes a cartridge on which a "save/record switch" for preventing accidental erase of records and an "identifying hole" for mechanically or physically distinguishing a recording-enable disc cartridge from a playback-only disc cartridge. The playback-only disc cartridge is not provided with the "save/record switch".

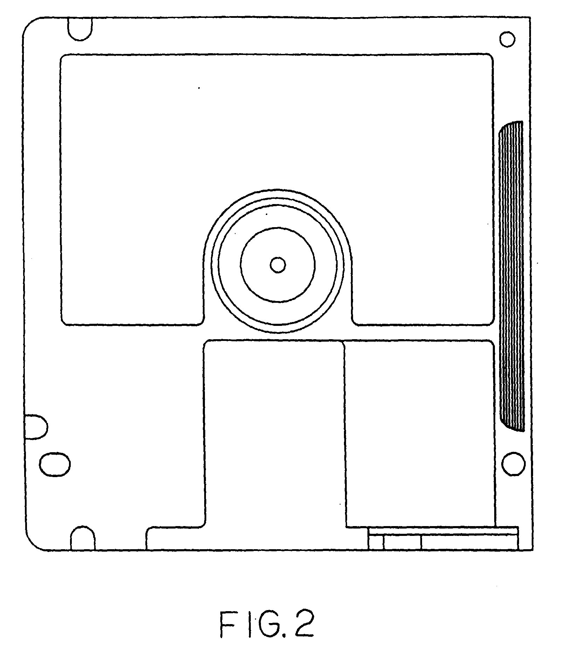

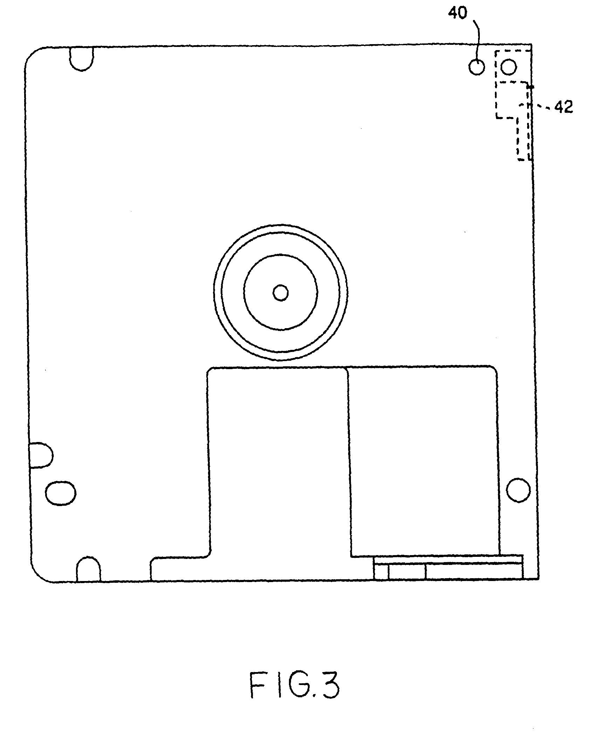

Fig. 2 is a plan view of a playback-only disc cartridge and Fig. 3 is a plan view of a recording-enable disc cartridge. In Fig. 3, there is an "identifying hole" indicated by reference numeral "40" and a "save/record switch" indicated by reference numeral "42". When the save/record switch 42 is pushed upward as shown in Fig. 3, the disc cartridge is recording enabled. And, when the save/record switch 42 is pushed downward, the disc cartridge is in a playback-only state. The recording-enable disc cartridge has a recording-enable compact disc medium received therein. And, the playback-only disc cartridge has a recording-disabled compact disc received therein. When a disc cartridge without the identifying hole 40 is loaded in a recording/playback device, it will only be identified as a playback-only disc cartridge and can not be operated in a recording mode. And, when a recording-enable disc cartridge with the save/record switch 42 set to "save" is loaded in a recording/playback device, no data can be recorded on the compact disc received in the cartridge, either, and the disc cartridge can operate only in a playback mode.

It is known that a cleaning device for cleaning the magnetic head and the object lens of the photo pickup of a compact disc drive is provided at one surface of the disc medium facing the magnetic head with a scraping sheet for scraping the surface of the magnetic head, and at another surface of the disc medium facing the photo pickup with a brush. Japanese Patent Application Publication Nos. 6430 and 6431 in 1995 disclose such cleaning device. To clean the magnetic head with the conventional cleaning device, the disc drive must be set to the recording mode and a recording-enable disc cartridge must be loaded.

And, It is also known that a cleaning device in the form of a disc cartridge for cleaning (the object lens of) the photo pickup of a compact disc drive is provided at one surface of the disc medium facing the photo pickup with a brush. Japanese Patent Application Publication No. 34008 in 1996 discloses such cleaning device.

When the conventional cleaning device is used to clean both the magnetic head and the photo pickup of a recording/playback device (or a playback device), the recording/playback (or the playback) device must be operated in recording mode and the cleaning device must be in the form of a recording-enable disc cartridge. However, in the case of the above-mentioned mini disc system, when the cleaning is proceeded in the recording mode, information for management of a "Recording starts" position in the TOC (Table of Content, or more particularly, the User Table of Content) area at central portion of the disc medium is overwritten only for a recording time or a time period equal to the recording volume. Whenever the cleaning is repeated, the magnetic head starts from a radially outer point on the disc. The cleaning shall continue until the total recording capacity available from the disc has been overwritten. This means no cleaning can be proceeded if repeated cleaning in recording mode to stop at the time the whole recording capacity of the disc ends can not be selected at the very beginning. If a cleaning of disc is still wanted under such condition, it is necessary to erase any and all records to ensure a blank area. In an extreme case in which a user forgot to end the instruction of "cleaning starts", it is necessary to erase records on the disc before the next cleaning can be proceeded.

And, a conventional cleaning device for cleaning only the photo pickup is normally provided in an area usually used to record music, that is, in an area surrounding the TOC area, with brushing hairs. It is therefore very important to avoid any access error when the brush is cleaning the object lens of the photo pickup. A user might mistake the access error for a failure of the device. Moreover, when the disc medium is received in a cartridge, the brush must not be too long and in contact with an inner surface of the cartridge to avoid becoming deformed. On the other hand, the brush must neither be so short that it can not reach the object lens of the photo pickup to perform the cleaning.

### SUMMARY OF THE INVENTION

It is therefore a primary object of the present invention to provide a cleaning device for cleaning the magnetic head and/or the photo pickup without the problems existing in the conventional cleaning device.

Another object of the present invention is to provide a cleaning device for cleaning the magnetic head and/or the photo pickup that is simpler and more convenient than the conventional cleaning device for similar purpose.

A further object of the present invention is to provide a cleaning device for cleaning the photo pickup wherein the cleaning element thereof will not become too long and deformed, nor will it become too short to perform the cleaning.

A still further object of the present invention is to provide a cleaning device for cleaning the magnetic head of a compact disc drive which operates in a simpler manner than the conventional cleaning device.

To achieve the above and other objects, the present invention includes a playback-only disc medium. On one surface of the disc medium facing the magnetic head, there is provided with a magnetic head cleaning element. And, on another surface of the disc medium facing the photo pickup, there is provided with a photo pickup cleaning element for cleaning the photo pickup. Moreover, information for management of disc identification information indicating the disc is a recording-enable disc are recorded on the disc medium. The playback-only disc is then received in a cartridge which is provided with identifying element to indicate a recording-enable disc cartridge. In other words, although a playback-only disc is used, it will be mistaken for a recording-enable disc by a disc drive.

With these arrangements, a recording mode can be selected from the recording device or the recording/playback device to proceed cleaning of the magnetic head and the photo pickup.

On the playback-only disc medium, there is management information recorded to indicate a "Recording starts" position within a specified area containing the magnetic head cleaning element. A No-record area on the disc medium begins from this "Recording starts" position. This makes the disc drive to mistake the No-record area for a recording-enable area and therefore, recording proceeds within the No-record area and the magnetic head is cleaned at the same time.

When the No-record area is converted into recording time, such that the No-record area has a breadth equivalent to a set time needed to clean the magnetic head, the recording shall automatically stop when the time set for cleaning the magnetic head ends. And, when information indicating remained time available for recording that corresponds to the set time needed to clean the magnetic head is recorded on the playback-only disc medium, the recording shall, similarly, automatically stop after the set time ends.

The cleaning device of the present invention uses a cartridge that is substantially the same as a recording-enable disc cartridge and can therefore be easily produced at low cost.

The disc cartridge of the present invention is provided at a side wall facing the magnetic head cleaning element with a slit for supplying specified cleaning fluid to the magnetic head cleaning element. Therefore, the present invention is also applicable to wet cleaning manner.

The photo pickup cleaning element provided on the disc medium at the surface facing the photo pickup may also be located at a position at where the focus of the photo pickup is adjusted. For example, the photo pickup cleaning element may be located at an inner border of the area within which disc medium management information is recorded. It is preferable that the disc medium is received in a cartridge. By this way, cleaning of the photo pickup starts at the same time the focus adjustment begins. During focus adjustment, the photo pickup shall get very close to the surface of the disc medium and this permits the photo pickup cleaning element to be very short.

In the present invention, the magnetic head cleaning element for cleaning the magnetic head of a compact disc drive is provided on the surface of the disc medium facing the magnetic head within a specified area. Information recorded in this specified area concerning the position from where the recording starts and information about the recording time of the disc medium all are recorded in a change-protected manner. And, to allow the remained usable recording time of the disc medium to become the set time required to clean the magnetic head, the "recording starts" position and the recording time of the disc medium are set in the present invention.

Since the "recording starts" position can not be changed, multiple times of successive cleaning (that is, recording) will not finally cause disappearance of blank area. In other words, no action needs to be taken to erase sounds, etc. recorded during the cleaning operation. Therefore, the cleaning device of the present invention is operationally enhanced.

And, for the remained usable recording time of the disc medium to become the set time required to clean the magnetic head, simply set the "recording starts" position and the recording time of the disc medium. And then, the cleaning will automatically stop when the set time of cleaning operation ends. This also enables the cleaning device of the present invention to function particularly well.

By changing the disc medium to a recording-disabled disc medium, for example, a playback-only disc medium, information about the "recording starts" position and the recording time can easily become unchangeable.

When the disc medium is received in a cartridge having an identification element to indicate a recording-enable disc cartridge, it can be mistaken for a recording-enable disc by a compact disc drive.

And, since a slit is provided on the cartridge at the side wall facing the magnetic head cleaning element for supplying specified cleaning fluid to the cleaning element via the slit, the present invention may also used to perform wet cleaning.

### BRIEF DESCRIPTION OF THE DRAWINGS

Fig. 1 is a sectional view showing an embodiment of the present invention;
Fig. 2 is a plan view showing a playback-only disc cartridge exclusively for playback purpose;
Fig. 3 is a plan view showing a recording-enable disc cartridge for receiving an embodiment of the present invention therein;
Fig. 4 is a bottom view of the disc cartridge of Fig. 3; and
Fig. 5 is a sectional view of another embodiment of the present invention with which the photo pickup can be effectively cleaned with a shortened photo pickup cleaning element.

### DETAILED DESCRIPTION OF THE PREFERRED EMBODIMENTS

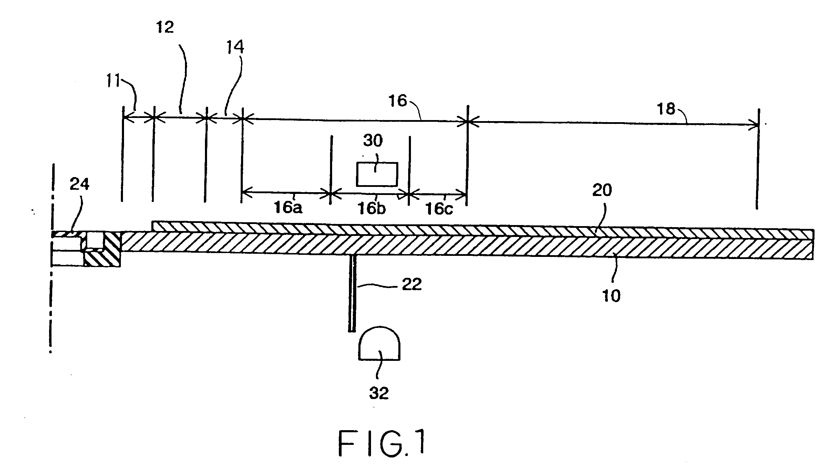

Please now refer to Fig. 1 which is a sectional view showing one half of a disc medium 10 according to an embodiment of the present invention. In the present invention, a playback-only disc medium is received in a recording-enable disc cartridge (as that shown in Fig. 3). Normally, a disc medium 10 includes a Read-in TOC area 12 in which medium identification information indicating disc type (a recording/playback or a playback-only disc), and medium basic information containing recording power, recording time, etc. are recorded. However, in the disc medium 10 of the present invention, the Read-in TOC area 12 includes medium identification information indicating the disc medium is a recording-enable disc. By this way, when a disc cartridge according to the present invention is loaded in a recording/playback device, the disc medium can be identified as a recording-enable disc from the identifying hole on the disc cartridge and the medium identification information recorded in the Read-in TOC area 12 of the disc medium 10 received in the disc cartridge.

The disc medium 10 is sequentially divided from its inner to outer side into a margin area 11, a Read-in TOC area 12, a User TOC area 14 for managing user's recording information, a Recorded area 16, and a No-record area 18 which becomes recording-enable according to the management information in the User TOC area 14. The User TOC area 14 can be overwritten in the case of a general disc medium but not in the case of the present invention. Although the disc medium 10 of the present invention is a playback-only disc, the information contained in its Read-in TOC area 12 is the same as that in a recording-enable disc. And, information that is recorded in the User TOC area 14 of a general playback-only disc is now recorded in the Read-in TOC area 12 in the disc of the present invention.

The disc medium 10 is provided at substantially a whole surface area facing a magnetic head 30 in the recording/playback device with a cleaning sheet 20 for cleaning the magnetic head 30. The magnetic head cleaning sheet 20 is generally made of non-woven fabric, hairs of synthetic fiber, or sheet applied with scrapping agent. Other materials that can clean without damaging the magnetic head 30 may also be used to make the cleaning sheet 20. The magnetic head cleaning sheet 20 needs not to cover the entire surface area of the disc medium 10. However, it should at least cover the No-record area 18. When the magnetic head cleaning sheet 20 attached to the disc medium 10 continues in circumferential direction without any break, there will not be any unevenness on the disc medium caused by the cleaning sheet 20. When the magnetic head cleaning sheet 20 attached to the disc medium 10 extends in radial direction to an outer end of the radius of the disc, the magnetic head 30 will not bounce up at a final section of the cleaning sheet 20 if a cleaning operation had been started in record mode and a user forgot to end the cleaning to let the recording operation continue at the final section.

The Recorded area 16 includes three sub-areas 16a, 16b, and 16c sequentially arranged from inner side to outer side of the Recorded area 16. The inner sub-area 16a has voice messages of "cleaning starts" or for cleaning methods recorded therein. The middle sub-area 16b is silent for a continuous period of time, for example, 30 minutes or so, and is provided at one surface facing a photo pickup 32 in the recording/playback device with a brush 22 for cleaning the object lens of the photo pickup 32. The brush 22 is preferably a round item having a cross section less than 1mm in diameter. The outer sub-area 16c has voice message of "cleaning ends" recorded therein.

In the embodiment of the present invention, the portion on the disc medium 10 covered by the sub-areas 16a and 16b is defined as magnetic track No. 1, and the portion covered by the sub-area 16c is defined as magnetic track No. 2. By specifying the playback of magnetic track No. 2, the photo pickup 32 will pass through the sub-area 16b at high speed. The object lens of the photo pickup 32 is therefore cleaned at the same time. Although it is also acceptable to consider the portion on the disc medium 10 covered by the sub-areas 16a, 16b and 16c as a magnetic track No. 1, the playback needs to continue only for the time needed for the photo pickup 32 to pass through the sub-area 16b.

A central metal plate 24 is mounted at a center of the disc medium 10.

The operation of the present invention will now be described as below.

When the cleaning device of the present invention is loaded into a recording/playback device, the recording/playback device will check the disc cartridge for any existence of the identifying hole 40 and the state of the save/record switch 42. Meanwhile, the photo pickup 32 will read in the Read-in TOC area 12 on the disc medium 10. In the present embodiment, since a disc cartridge the same as the recording-enable disc cartridge is used, there is an identifying hole 40 provided on the disc cartridge. Moreover, medium identification information indicating the disc is a recording-enable disc is recorded in the Read-in TOC area 12 of the disc medium 10 and there is a User TOC area 14 provided on the disc medium 10. These allow the recording/playback device to identify the cleaning device of the present invention as a recording-enable disc cartridge. Therefore, a user may select to operate the recording/playback device in the record mode.

According to the information in the User TOC Area 14, the "recording starts" position is at an innermost side of the No-record area 18 (or the outermost side of the Recorded area 16). Therefore, when the user selects the record mode, the recording/playback device will feed its magnetic head 30 and photo pickup 32 to the innermost side of the No-record area 18 and enters a recording standby status. Since the photo pickup 32 will first pass the Recorded Area 16 before it moves into the No-record Area 18, the object lens of the photo pickup 32 is therefore cleaned by the brush 22 provided at the sub-area 16b. When the user operates to start the cleaning, the magnetic head 30 will approach the disc medium 10 until it contacts with the surface of the disc medium, that is, contacts with the magnetic head cleaning sheet 20 attached to the surface of the disc medium 10. At this point, the recording starts. During the recording operation, the magnetic head 30 contacts with the cleaning sheet 20 and is therefore cleaned at the same time.

When the user operates to end the recording, the recording/playback device will terminate the recording. At this point, the magnetic head 30 is lifted and returned to the User TOC area 14. Information in the User TOC area 14 is overwritten by contents corresponding to the recording operation during cleaning, such as data recorded at magnetic track No. 2, the next "recording starts" position, etc. However, since the disc medium 10 used in the present embodiment is a playback-only disc medium, the information in the User TOC area 14 will not be overwritten even if there is an overwriting movement. When the record mode is selected the next time, the cleaning of the magnetic head 30 will start from an exactly the same position on the disc medium 10. In the event the recording/playback device checks the User TOC area 14 for any overwritten information and a message indicating error overwriting TOC information is shown, it will not affect the next cleaning at all.

The following explains the cleaning of the photo pickup of a recording/playback device or a playback device. In the case of a recording/playback device, the playback mode is selected to start the playback. And, in the case of a playback device, simply start the playback. When the playback operation starts, the device starts the playback of magnetic track No. 1. At this point, message of "playback starts" or message for the operating methods recorded in the sub-area 16a will be heard. Thereafter, the user shall operate for the playback of the magnetic track No. 2. At this point, the photo pickup 32 passes through the sub-area 16b at high speed while the brush 22 gently swipes the object lens of the photo pickup 32 to clean the same. When the photo pickup 32 passes through the sub-area 16b and enters into the magnetic track No. 2 or the sub-area 16c, a message of "cleaning ends" will be heard. No action is needed by the user to stop the playback. Since there is not any information recorded, the playback automatically stops when the playback of the track No. 2 ends. That is, when the cleaning ends, the device stops, too. In the case of a recording/playback device, the magnetic head 30 will maintain lifted when the device is in the playback mode.

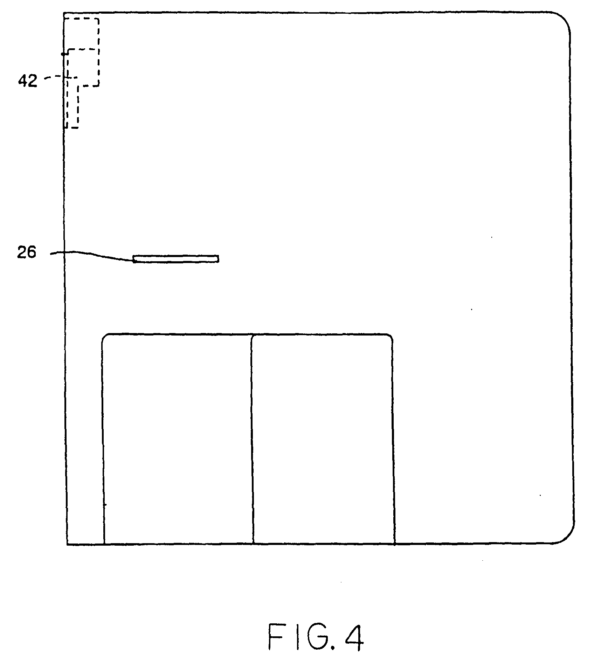

Since it is preferable to clean the magnetic head 30 in a wet manner, the cleaning can be performed by supplying cleaning fluid, such as isopropyl alcohol, to the magnetic head cleaning sheet 20. To supply isopropyl alcohol to the cleaning sheet 20 from outside of the disc cartridge, a slit 26 as shown in Fig. 4 is formed on the disc cartridge of the present invention at the side facing the magnetic head cleaning sheet 20. Cleaning fluid, such as isopropyl alcohol, is supplied to the magnetic head cleaning sheet 20 via the slit 26. The cleaning fluid supplied to the cleaning sheet 20 gradually permeates into the cleaning sheet 20 and dissolves adhesive that adhering the cleaning sheet 20 to the disc media 10 and even causes damage to the material of the disc medium 10. To prevent such damage, a coating that can stop alcohol substance from permeating therethrough may be applied on an entire surface of the magnetic head cleaning sheet 20 that is to be adhered to the disc medium 10.

Mini disc can also be used as a secondary memory of a computer. In this case, messages of "cleaning starts" and "cleaning ends" are not in the voice form but in the form of data signals of similar contents stored in the memory.

Materials other than the magnetic head cleaning sheet 20, such as non-woven fabric or hair of synthetic fibers, may also be used to clean the magnetic head 30, so long as the material would not cause damage to the magnetic head 30.

Although the mini disc has been taken as an example in the above description, it is understood that the present invention may also be used for cleaning the magnetic head and the photo pickup of compact discs of other types.

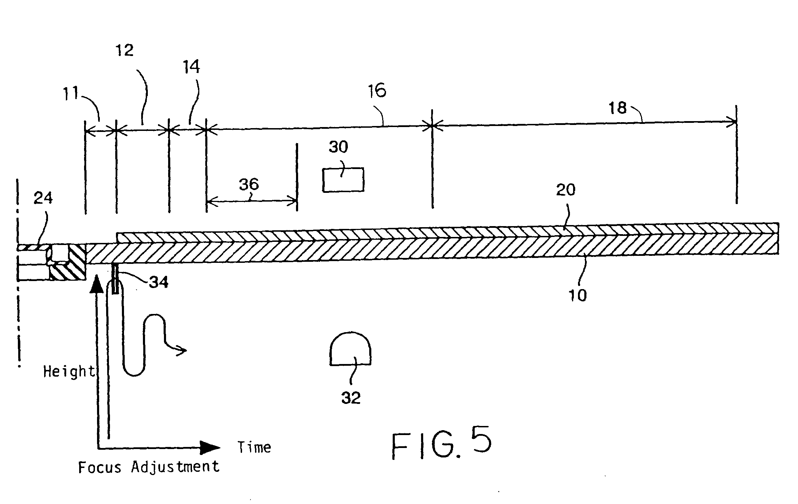

In another embodiment of the present invention, a shortened photo pickup cleaning element is used to clean the photo pickup in an effective manner. Fig. 5 is a sectional view showing the structure of the cleaning device according to this embodiment. Like elements in Figs. 1 and 5 will be denoted by the same reference numerals. In this embodiment, the disc medium 10 is also received in a disc cartridge. However, a brush 34 used as the cleaning element for cleaning the photo pickup 32 in this embodiment is mounted near a photo pickup focus adjusting position which is located at an inner side of the innermost border of the Read-in TOC area 12. Message of "cleaning ends" is recorded in an area 36 that is at the innermost part of the Recorded Area 16, that is, the magnetic track No. 1.

When a disc cartridge is loaded, the disc drive will first adjust the focus of the photo pickup 32. In the procedure of focus adjustment, the photo pickup 32 will quickly approach the surface of the disc medium 10 until only a very small distance of about 0.5mm is left between them and the disc medium turns at the same time or before and after the approach movement. Thereafter, the distance between the disc medium 10 and the photo pickup 32 is adjusted to bring the signal recording surface of the disc medium 10 into focus. At this point, only the distance is adjusted to bring the disc medium surface into focus without reading in any record signal. The information in the Read-in TOC area 12 will be read in only after the disc medium is brought into focus. If the focusing is successfully completed, playback of the track No. 1 will begin to output the voice message of "cleaning ends".

In the procedure of focus adjustment, since the photo pickup 32 will approach the disc medium surface until a distance as small as 0.5mm is left between them, a photo pickup cleaning element 34 of 1mm in length (that is, lmm projected from the disc medium surface) mounted at the focus adjusting position is long enough for cleaning the photo pickup. With such a small length, the cleaning element 34 can be received in the disc cartridge without easily becoming deformed. When the photo pickup 32 is mounted in the disc drive, it is cleaned from the very beginning of the focus adjustment. In the event difference exists in the focus adjustment position of individual disc cartridges, simply extends the photo pickup cleaning element 34 in radial direction to absorb such individual difference.

In the above embodiment, the cleaning of the magnetic head 30 in record mode shall stop when the recording in the No-record area 18 ends. Since it is no good to over clean the magnetic head 30, it is preferable that the recording automatically stops after a suitable period of time set to clean the magnetic head 30 has lapsed. For this purpose, it will be sufficient for the blank portion on the disc medium 10 available for recording (that is, the breadth of the No-record area 18) to equal to the time allowing suitable clean of the magnetic head 30. More specifically, to permit the remained usable recording time to equal to the time allowing suitable clean of the magnetic head 30, the recording time of the disc medium 10, the "recording starts" position, and the breadth of the No-record area 18 after the "recording starts" position must be adjusted. For example, to allow the information about recording time to be recorded in the Read-in TOC area 12 along with the medium identification information, the recording time information is set to a length which is shorter than a normally required value.

By doing this, the recording/playback device may judge a fully recorded status from the lapse of a predetermined period of recording time to end the recording. The drawback of over cleaning the magnetic head 30 can therefore be avoided. And, the automatic stop of the cleaning action enables the cleaning device of the present invention to have upgraded performance.

From the above description, following advantages can be found from the present invention:
1. The present invention can be used to clean both the magnetic head and the photo pickup.
2. Since a playback-only disc medium is used in the present
invention, no recording is physically performed during the cleaning of the magnetic head in the record mode and therefore, any undesirable erasing of recording information from the disc medium due to the cleaning can be eliminated.
3. In the case of a recording/playback device in the playback mode or a playback-only device, cleaning of the photo pickup can be performed in accordance with the messages of "cleaning starts" and "cleaning ends".
4. Since the mounting position of the photo pickup falls in a silent section of the disc medium, the problems of stop of cleaning operation due to error reading and/or the occurrence of noises can therefore be avoided.
5. Moreover, by mounting the photo pickup cleaning element on the disc medium at the surface facing the photo pickup and at the focus adjustment position, the photo pickup can be cleaned at the very beginning of the focus adjusting. And, since the photo pickup gets very close to the disc medium surface during the focus adjusting, a very short photo pickup cleaning element in the present invention would be sufficient to clean the photo pickup.
6. The "recording starts" position and the recording time of the No-record area are properly adjusted to allow automatic stop of the cleaning within a predetermined time. The problem of over cleaning the magnetic head is avoided and the user needs not to particularly watch for the time period of cleaning.

## Claims

1. A cleaning device for cleaning magnetic head and photo pickup of a compact disc drive, charaterised by a playback-only disc medium and a disc cartridge for receiving said playback-only disc medium therein;
said disc medium being provided within a specified area on one surface facing said magnetic head with a magnetic head cleaning element, and at a specified position on another surface facing said photo pickup with a photo pickup cleaning element, said disc medium also having medium identification information recorded therein to indicate that said disc medium is a re-enable disc; and
said disc cartridge being provided with an identifying element, such that said disc cartridge can be identified as a recording-enable disc cartridge.

2. A cleaning device as claimed in claim 1, wherein said playback-only disc medium has management information recorded thereto to indicate a no-record area at where a "recording starts" position of said specified area containing said magnetic head cleaning element locates.

3. A cleaning device as claimed in claim 2, wherein said no-record area has a breadth which provides a recording time equivalent to the set time required to clean said magnetic head.

4. A cleaning device as claimed in claim 2, wherein said playback-only disc medium has information recorded therein to indicate remained usable recording time that is equal to said set time required to clean said magnetic head.

5. A cleaning device as claimed in claim 1, wherein said disc cartridge is substantially the same as a cartridge for a recording-enable disc cartridge.

6. A cleaning device as claimed in claim 1, wherein said disc cartridge is provided on a cartridge wall facing said magnetic head cleaning element with a slit for supplying specified cleaning fluid to said magnetic head cleaning element from said slit.

7. A cleaning device as claimed in claim 1, wherein said photo pickup cleaning element is provided at an inner side of an area on said playback-only disc medium having medium management information recorded therein.

8. A cleaning device as claimed in claim 7, wherein said photo pickup cleaning element is provided at an inner border of said area having said medium management information recorded therein.

9. A cleaning device for cleaning a photo pickup, comprising a disc medium which has a photo pickup cleaning element mounted on one surface of said disc medium facing said photo pickup and located at a position at where adjustment of focus of said photo pickup occurs.

10. A cleaning device as claimed in claim 9, wherein said disc medium is received in a disc cartridge.

11. A cleaning device for cleaning a photo pickup, comprising a disc medium which has a photo pickup cleaning element mounted on one surface of said disc medium facing said photo pickup and located at an inner side of an area of said disc medium having medium management information recorded therein.

12. A cleaning device as claimed in claim 11, wherein said photo pickup cleaning element is mounted at an inner border of said area having said medium management information recorded therein.

13. A cleaning device comprising a magnetic head cleaning element for cleaning magnetic head of a compact disc drive, said magnetic head cleaning element being mounted within a specified area on one surface of said disc medium facing said magnetic head, said disc medium having information about "recording starts" position and information about recording time of said disc medium unchangeably recorded in said specified area, and said "recording starts" position and said recording time of said disc medium being set to allow a remained usable reading time of said disc medium to be equal to a set time required to clean said magnetic head.

14. A cleaning device as claimed in claim 13, wherein said disc medium is formed from a recording-disabled disc medium.

15. A cleaning device as claimed in claim 13, wherein said disc medium is received in a disc cartridge which has an identifying element to indicate that said disc cartridge is a recording-enable disc cartridge.

16. A cleaning device as claimed in claim 13, wherein said disc cartridge is provided on one cartridge wall facing said magnetic head cleaning element with a slit for supplying specified cleaning fluid to said magnetic head cleaning element from said slit.

17. A cleaning device as claimed in claim 4, wherein said disc medium is received in a disc cartridge which has an identifying element to indicate that said disc cartridge is a recording-enable disc cartridge.
